**Europäisches Patentamt**

**European Patent Office**

**Office européen des brevets**

(11) Numéro de publication : **0 334 227 B1**

(12)                   **FASCICULE DE BREVET EUROPEEN**

(45) Date de publication du fascicule du brevet :
    **13.05.92 Bulletin 92/20**

(51) Int. Cl.$^5$ : **B26D 7/26**

(21) Numéro de dépôt : **89104784.7**

(22) Date de dépôt : **17.03.89**

(54) **Dispositif pour le montage et le démontage rapide d'outils ou de lames sur un appareil circulaire.**

(30) Priorité : **22.03.88 FR 8804053**

(43) Date de publication de la demande :
    **27.09.89 Bulletin 89/39**

(45) Mention de la délivrance du brevet :
    **13.05.92 Bulletin 92/20**

(84) Etats contractants désignés :
    **AT BE CH DE ES FR GB IT LI LU NL SE**

(56) Documents cités :
    **CH-A- 414 076**
    **FR-A- 2 104 112**
    **US-A- 3 985 066**

(73) Titulaire : **SA MARTIN**
    **22, rue Decomberousse B.P. 4049**
    **F-69615 Villeurbanne cédex (FR)**

(72) Inventeur : **Capdeboscq, Bernard**
    **F-38540 Saint-Just-Chaleyssin (FR)**

(74) Mandataire : **Colomb, Claude**
    **BOBST S.A., Service des Brevets, Case Postale**
    **CH-1001 Lausanne (CH)**

## Description

La présente invention concerne un dispositif de montage et de démontage rapide d'outils ou de lames sur un appareil circulaire supporté par un arbre rotatif, selon le préambule de la revendication 1. Un tel dispositif est connu du document US-A-3 985 066.

Dans les dispositifs connus de ce type les outils, par exemple des outils de découpage présentent la forme d'un secteur annulaire et peuvent être désignés de manière générale comme étant des lames. Ils coopèrent avec un contre-outil placé sur un arbre parallèle à l'arbre portant les appareils circulaires pour, par exemple, découper des fentes dans une matière en plaque passant entre les outils et les contre-outils. Ces opérations de découpage s'effectuent au moyen de plusieurs appareils circulaires espacés latéralement sur leur arbre de façon à procéder à des découpes simultanées à plusieurs endroits du matériau en plaques. Ainsi, avec deux outils diamétralement opposés fixés sur un appareil circulaire, il est possible de faire deux découpes par chaque tour de l'arbre, par exemple une découpe aux bords avant et arrière du matériau en plaques pour suivre la variation de format des découpes. Il est avantageux de monter un outil ou lame fixe et un deuxième outil, ou lame mobile dans le même plan sur un ou plusieurs appareils circulaires. La lame mobile est déplaçable angulairement par rapport à la lame fixe. Dans les dispositifs connus, les outils ou lames déplaçables sont fixés sur une couronne dentée intérieure, logée dans chaque appareil circulaire, ce qui permet un réglage simultané de tous les outils ou lames mobiles de tous les appareils circulaires placés côte à côte le long d'un arbre rotatif. Ce réglage s'effectue au moyen d'un arbre traversant chaque appareil circulaire, ledit arbre étant équipé d'un pignon par appareil circulaire. Ainsi, chaque pignon s'engage dans la denture de chaque couronne dentée intérieure et provoquera, sur commande, la rotation de celle-ci.

Tout outil ou lame usé ou éventuellement endommagé doit pouvoir être remplacé facilement. Un échange des outils ou lames doit également être possible lorsque, en fonction du format ou du genre de découpe à réaliser, il devient nécessaire d'utiliser de nouveaux outils ou lames. Pour ce faire, les outils ou lames connus sont fixés sur des éléments de retenue au moyen de vis ou par des accouplements très compliqués et souvent en panne. De plus de telles constructions sont d'un prix élevé.

Un but principal de la présente invention est donc de prévoir une solution permettant le montage et démontage rapide d'outils ou lames portées par un appareil circulaire à l'aide d'une construction simple, efficace et économique.

Pour résoudre le problème posé, l'invention propose un dispositif de montage et de démontage rapide d'outils ou lames sur au moins un appareil circulaire supporté par un arbre rotatif, plusieurs desdits outils ou lames étant espacés circonférentiellement dans un même plan entre deux éléments de retenue annulaires parallèles, les deux éléments de retenue annulaires étant montés sur l'arbre rotatif, le deuxième élément de retenue annulaire étant agencé de façon à pouvoir être déplacé angulairement par rapport au premier élément de retenue annulaire, le premier élément de retenue annulaire présentant sur l'une de ses faces une pluralité d'alésages répartis circonférentiellement sur un premier rayon constant et destinés à recevoir des tétons fixés sur l'une des faces latérales de l'outil ou lame, caractérisé en ce que le deuxième élément de retenue présente au moins un évidement aménagé sur sa circonférence et s'étend radialement vers l'intérieur, ledit évidement ayant une ouverture circonférentielle correspondant à la longueur circonférentielle d'un outil ou lame, en ce que ledit premier élément de retenue annulaire est équipé d'un logement concentrique dans lequel est montée rotativement une couronne intérieure dentée présentant sur l'une de ses faces une pluralité d'alésages répartis circonférentiellement sur un second rayon constant et destinés à recevoir des tétons fixés sur l'autre face latérale de l'outil ou lame, suivant que l'on pivote ledit outil ou lame sur lui-même, en ce que ledit deuxième élément de retenue présente sur sa face intérieure au moins une rainure concentrique dans laquelle s'engagent librement soit, les tétons placés sur l'une des faces de l'outil ou lame, soit les tétons placés sur l'autre face de l'outil ou lame suivant que l'on pivote ledit outil ou lame sur lui-même, lors de l'introduction de l'outil ou lame au travers de l'évidement, suivie du déplacement angulaire dudit élément de retenue annulaire en vue de serrer l'outil ou lame entre les faces intérieures desdits premier et deuxième éléments de retenue.

Le dispositif présente l'avantage que le montage et le démontage des outils ou lames ne nécessite aucune fixation au moyen de vis. La fixation au moyen de tétons à insérer simplement dans les éléments de retenue est beaucoup plus rapide et peut se faire sans outils. Pour maintenir les outils ou lames introduits entre les deux éléments de retenue annulaires et positionnés, à un endroit donné, au moyen de tétons, il suffit, après leur introduction au travers d'un évidement latéral dans l'un des éléments de retenue, de tourner l'un de ces deux éléments de retenue annulaires par rapport à l'autre. On enferme ainsi les outils entre les deux éléments de retenue annulaires. La fixation des outils au moyen de tétons peut se faire pour des outils fixes et pour des outils mobiles réglables circonférentiellement par rapport aux outils fixes. Les tétons de ceux-ci sont engagés dans les alésages portés par la face du premier élément de retenue annulaire alors que, dans le cas d'outils mobiles, les tétons de ceux-ci sont engagés dans les alésages aménagés dans la face de la couronne dentée intérieure.

Une forme d'exécution particulière de l'objet de l'invention sera décrite plus en détail ci-après à l'aide du dessin annexé dans lequel:

la fig. 1 montre une vue latérale d'un appareil circulaire portant des outils entre deux éléments de retenue;

la fig. 2 est une coupe axiale de la fig. 1;

la fig. 3 est une vue en perspective agrandie d'une partie d'un appareil circulaire;

la fig. 4 est une vue de dessus du corps de verrouillage représenté dans sa position de verrouillage, et

la fig. 5 est une vue partielle de dessus d'une variante de construction des éléments de retenue annulaires.

Le moyeu 2 d'un premier élément de retenue annulaire 3 est monté fixe, à l'aide de clavettes, sur un arbre rotatif. Un deuxième élément de retenue annulaire 4, coopérant avec le premier, est monté sur le moyeu 2 et peut être tourné par rapport au premier élément de retenue annulaire 3 en étant guidé entre deux bagues 5 et 6 montées sur le moyeu 2. L'élément de retenue annulaire 3 présente un logement concentrique 7 par rapport à l'axe de l'arbre rotatif 1 dans lequel est logée une couronne dentée intérieure 8. Le logement concentrique 7 de l'élément de retenue annulaire 3 est usiné de manière à ce que la face frontale de la couronne dentée intérieure 8 et la face frontale de la collerette 9 de l'élément de retenue annulaire 3 se trouvent dans un plan commun 10. C'est dans ce plan 10 que sont usinés, sur un premier cercle de rayon R, des alésages 11 dans la collerette 9 de l'élément de retenue annulaire 3. Ces alésages 11 sont répartis angulairement sur la circonférence définie par le rayon R. Sur un deuxième cercle plus petit de rayon R1, des alésages 12 sont usinés, dans la couronne dentée intérieure 8, ces alésages 12 étant, eux aussi, répartis angulairement sur une circonférence définie par le rayon R1. La distance entre ces alésages correspond soit à la distance entre deux tétons 13 portés par la partie inférieure d'un outil 14 réglable et qui s'étendent avec leurs extrémités en saillie dans les alésages 12 aménagés dans la couronne dentée intérieure 8 soit à la distance entre deux tétons 16 portés par la partie supérieure de l'outil fixe 15. Dans ce cas, les tétons 16 s'engagent dans les alésages 11 de la collerette 9 de l'élément de retenue annulaire 3. La couronne dentée intérieure 8 peut être entraînée au moyen d'un pignon non-représenté pour ainsi varier la position circonférentielle de l'outil mobile 14 par rapport à l'outil fixe 15. L'arbre rotatif 1 porte en règle générale plusieurs appareils de même construction disposés côte à côte le long de l'arbre rotatif 1. Un arbre de commande (non-représenté) porte un nombre correspondant de pignons, soit un par appareil circulaire, de façon à assurer l'entraînement simultané des couronnes dentées intérieures 8, permettant ainsi le réglage simultané de tous les outils mobiles.

Le deuxième élément de retenue annulaire 4 présente sur sa face intérieure une rainure circulaire 18. Cette rainure circulaire 18 est destinée à recevoir soit le téton 13 soit le téton 16 suivant que l'on utilise un outil fixe ou un outil mobile, c'est à dire que l'on pivote ou non l'outil 15 sur lui-même.

Les deux éléments de retenue annulaires 3 et 4 peuvent être déplacés angulairement l'un par rapport à l'autre, cela en raison du fait que les tétons 13 ou 16, suivant que l'on utilise la version "outil fixe" ou "outil mobile", vont se loger dans la rainure circulaire 18.

Pour introduire les outils 15, dont plusieurs sont montés sur la circonférence d'un appareil circulaire entre deux éléments de retenue annulaires 3 et 4, on a prévu d'aménager un évidement 25 dans le deuxième élément annulaire 4. Cet évidement 25 s'étend, radialement en direction de l'arbre rotatif 1 à partir du bord extérieur de l'élément de retenue annulaire. C'est au travers de cet évidement 25 que les outils seront introduits à la main dans leur position de travail, tout en enfonçant les tétons de fixation se trouvant sur chaque outil dans les alésages correspondants de l'élément de retenue annulaire 3 ou de la couronne dentée intérieure 8.

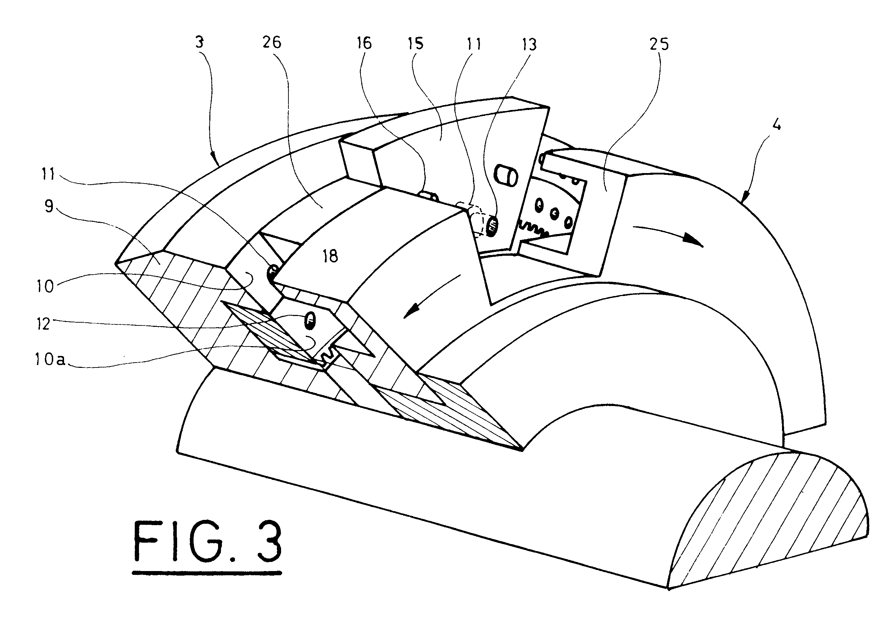

La fig. 3 représente le montage d'un outil mobile 15 dont les tétons 13 sont introduits dans les alésages 11 de la couronne dentée intérieure 8 alors que les tétons 16 viendront, après rotation de l'élément de retenue annulaire 4 s'engager librement dans la rainure circulaire 18. L'outil mobile 15 étant en place en face de l'évidement 25, l'élément de retenue annulaire 4 sera déplacé angulairement jusqu'à ce que l'évidement 25 se trouve en face d'un corps de verrouillage 26 qui viendra s'engager dans ledit évidement 25 et bloquera de ce fait l'élément de retenue annulaire 4 par rapport à l'autre élément de retenue annulaire 3 tout en assurant la position latérale de l'outil 15 dont les faces seront alors en contact avec les faces intérieures de chacun desdit éléments de retenue annulaires 3 et 4.

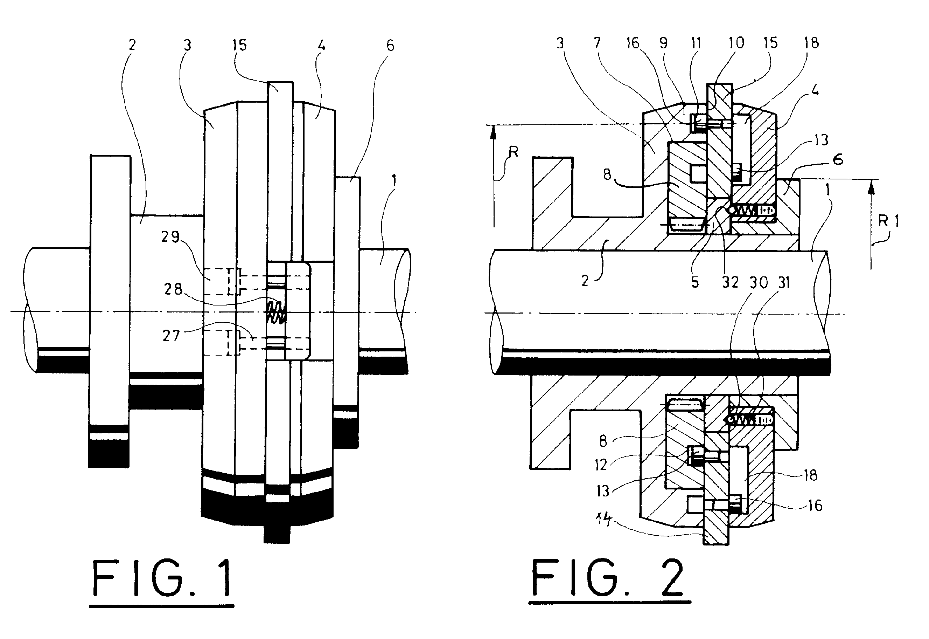

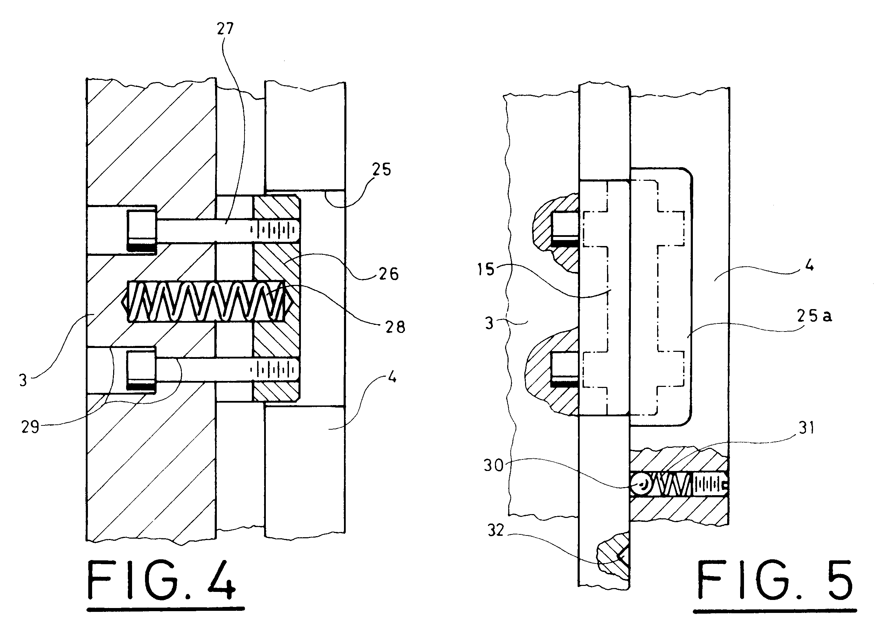

Le corps de verrouillage 26, de même longueur que l'évidement 25, est monté sur l'élément de retenue annulaire 3 au moyen de deux vis partiellement filetées 27 vissées dans le corps de verrouillage 26. Un ressort de compression 28 est placé entre le corps de verrouillage 26 et l'élément de retenue annulaire 3. Le corps de verrouillage 26 peut être poussé en direction axiale vers l'intérieur, contre l'action du ressort 28, pour le libérer de l'évidement 25. Lors de cette opération, le corps de verrouillage 26 est guidé par les vis partiellement filetées 27 dont la partie non filetée se déplace dans des alésages 29 aménagés dans l'élément de retenue annulaire 3. En faisant ensuite tourner l'élément de retenue annulaire 4 par rapport à l'autre, on enfermera le corps de verrouillage 26 entre ceux-ci et l'on continuera à tourner l'élément de retenue annulaire 4 jusqu'à ce que son évidement 25 se trouve en face de l'outil 15 à échanger (voir fig. 3). Dans la position représentée aux fig. 1 et 4, l'élément de retenue annulaire 4 est bloqué par le corps de verrouillage.

La fig. 5 montre une variante du dispositif. Dans cette forme d'exécution, l'évidement dans l'élément de retenue annulaire 4 ne traverse ce dernier que partiellement et présente la forme d'un logement 25a ouvert sur la face intérieure dudit élément de retenue annulaire 4. Ainsi, un outil 14 ou 15 peut être introduit radialement dans ce logement 25a. L'élément de retenue annulaire 4 est ensuite déplacé angulairement de façon à ce que le logement 25a ne soit plus en face de l'outil 15, assurant ainsi la position latérale de celui-ci. En choisissant cette solution, on peut avantageusement remplacer le corps de verrouillage 26 par un dispositif plus simple comprenant par exemple une bille 30 poussée par un ressort 31 et venant s'engager, après rotation de l'élément de retenue angulaire 4, dans un logement 32 aménagé dans la face de la bague 5 (voir aussi fig. 1)

**Revendications**

1. Dispositif de montage et de démontage rapide d'outils ou de lames (15) sur au moins un appareil circulaire supporté par un arbre rotatif (1), plusieurs desdits outils ou lames étant espacés circonférentiellement dans un même plan entre deux éléments de retenue annulaires parallèles (3,4), les deux éléments de retenue annulaires (3, 4) étant montés sur l'arbre rotatif (1), le deuxième élément de retenue annulaire (4) étant agencé de façon à pouvoir être déplacé angulairement par rapport au premier élément de retenue annulaire (3) le premier élément de retenue annulaire (3) présentant sur l'une de ses faces (10) une pluralité d'alésages (11) répartis circonférentiellement sur un premier rayon constant (R) et destinés à recevoir des tétons (16) fixés sur l'une des faces latérales de l'outil ou lame (15), caractérisé en ce que, le deuxième élément de retenue (4) présente au moins un évidement (25) aménagé sur sa circonférence et s'étend radialement vers l'intérieur, ledit évidement (25) ayant une ouverture circonférentielle correspondant à la longueur circonférentielle d'un outil ou lame (15), en ce que ledit premier élément de retenue annulaire (3) est équipé d'un logement concentrique dans lequel est montée rotativement une couronne dentée (8) présentant sur l'une de ses faces (10a) une pluralité d'alésages (12) répartis circonférentiellement sur un second rayon constant (R1) et destinés à recevoir des tétons (13) fixés sur l'autre face latérale de l'outil ou lame (15), suivant que l'on pivote ledit outil ou lame sur lui-même, en ce que ledit deuxième élément de retenue (4) présente sur sa face intérieure au moins une rainure concentrique (18, 19) dans laquelle s'engagent librement soit les tétons (16) placés sur l'une des faces de l'outil ou lame (15), soit les tétons (13), placés sur l'autre face de l'outil ou lame (15) suivant que l'on pivote ledit outil ou lame (15) sur lui-même, lors de l'introduction de l'outil ou lame au travers de l'évidement (25), suivie du déplacement angulaire dudit élément de retenue annulaire en vue de serrer l'outil ou lame (15) entre les faces intérieures desdit premier et deuxième éléments de retenue (3, 4).

2. Dispositif selon la revendication 1, caractérisé en ce que l'évidement (25) s'étendant radialement vers l'intérieur dans l'élément de retenue annulaire (4) se présente sous la forme d'un logement (25a) ouvert vers la face intérieure dudit élément de retenue annulaire (4) sans le traverser axialement.

3. Dispositif selon la revendication 1, caractérisé en ce que l'élément de retenue annulaire (4) est verrouillé au moyen d'un corps de verrouillage (26) ayant une longueur circonférentielle correspondant à la longueur de l'évidement (25), ce corps de verrouillage (26) étant monté de façon à pouvoir se déplacer axialement contre l'action d'un ressort (28) placé entre le deuxième élément annulaire (3) et le corps de verrouillage en coulissant sur des vis partiellement filetées (27) fixées sur ledit corps de verrouillage (26) de manière à ce qu'un déplacement axial du corps de verrouillage (26), lorsqu'il est degagé de l'évidement (25), autorise une rotation, ladite rotation ayant pour effet d'enfermer ledit corps de verrouillage (26) entre ces éléments (3, 4) pendant l'introduction de l'outil ou lame (15) à travers l'évidement (25), et qu'ensuite, lors d'une rotation en sens inverse dudit élément de retenue annulaire (4), le corps de verrouillage (26) s'engage automatiquement dans ledit évidement (25) et bloque la rotation de l'élément de retenue annulaire (4).

**Patentansprüche**

1. Vorrichtung zum raschen Anbringen und Entfernen von Werkzeugen oder Messern (15) auf wenigsten einem runden durch eine Rotationswelle (1) getragenen Gerät, wobei mehrere der erwähnten Werkzeuge oder Messer peripheriemässig auf einer gemeinsamen Ebene zwischen den beiden ringartigen parallelen Halteelementen (3, 4) von einander entfernt, und die beiden erwähnten ringartigen Halteelemente (3, 4) auf die Rotationswelle (1) montiert sind, das zweite ringartige Halteelement (4) so angeordnet ist, dass es in bezug auf das erste ringartige Halteelement (3) winkelmässig verschoben werden kann, und das erste ringartige Halteelement (3) auf einer Seite (10) mehrfache Bohrungen (11) aufweist, die auf einem ersten konstanten Halbmesser (R) peripher angeordnet sind und die Schraubenspitzen (16) an den Seiten des Werkzeugs oder Messers (15) aufzunehmen bestimmt sind, dadurch gekennzeichnet, dass das zweite Halteelement (4) wenigstens eine Aussparung (25) aufweist, welche auf der Peripherie angeordnet ist und sich radial nach innen erstreckt, wobei die erwähnte Aussparung (25) eine periphere Oeffnung aufweist, die der peripheren Länge eines Werkzeugs oder eines Messers (15) entspricht, dass das erste ringartige Halteelement (3) mit einem konzentrischen Sitz versehen ist, in welchen ein rotationsmässig gleichlaufender Zahnkranz (8) montiert wird, der auf seiner Seite (10a) mehrere Bohrungen (12) aufweist, die peripher auf einem zweiten konstanten Halbmesser (R1) angeordnet sind und die Schraubenspitzen (13) auf der anderen Seite des Werkzeugs oder des Messers (15), je nachdem, ob das erwähnte Werkzeug oder Messer um sich selbst gedreht wird, aufzunehmen bestimmt sind, dass das zweite Halteelement (4) auf seiner Innenseite wenigstens eine konzentrische Rillung (18, 19) aufweist, in welcher entweder die Schraubenspitzen (16) auf einer Seite des Werkzeugs oder des Messers (15) oder die Spitzen (13) auf der anderen Seite des Werkzeugs oder des Messers (15) frei eingerückt werden, je nachdem, ob das erwähnte Werkzeug oder das Messer (15) um sich selbt gedreht wird, wenn das Werkzeug oder das Messer durch die Aussparung (25) eingeführt wird, worauf das erwähnte ringartige Halteelement anschliessend verschoben wird, damit das Werkzeug oder das Messer (15) zwischen den Innenseiten des ersten und zweiten Halteelements (3, 4) gespannt werden kann.

2. Vorrichtung gemäss Anspruch 1, dadurch gekennzeichnet, dass die sich im ringartigen Halteelement (4) radial nach innen erstreckende Aussparung (25) die Form eines Sitzes (25a) aufweist, der nach der Innenseite des erwähnten ringartigen Halteelements (4) hin offen ist, ohne dasselbe jedoch axial zu durchqueren.

3. Vorrichtung gemäss Anspruch 1, dadurch gekennzeichnet, dass das ringartige Halteelement (4) durch ein Sperrstück (26) mit einer peripheren Länge, die der Länge der Aussparung (25) entspricht, verriegelt werden kann, wobei das erwähnte Sperrstück (26) so angeordnet ist, dass es sich gegen die Kraft einer Feder (28) zwischen dem zweiten ringartigen Halteelement (3) und dem Sperrstück axial durch Gleiten auf den teilweise mit Gewinde versehenen Schrauben (27) am erwähnten Sperrstück (26) verschieben lässt, dass eine axiale Verschiebung des Sperrstücks (26) bei Ausrücken aus der Aussparung (25) eine Drehung ermöglicht, die das Einschliessen des erwähnten Sperrstücks (26) zwischen diesen beiden Elementen (3, 4) während der Einführung des Werkzeugs oder des Messers (15) durch die Aussparung (25) beinhaltet, und dass hierauf bei Drehung des erwähnten ringartigen Halteelements (4) in der Gegenrichtung das Sperrstück (26) selbst tätig in die

erwähnte Aussparung (25) einrückt und die Drehung des ringartigen Halteelements (4) verunmöglicht.

## Claims

1. Device for quick fitting and dismantling of tools or blades (15) on at least a circular apparatus supported by a rotary shaft (1), several of the said tools or blades being circumferentially distanced on a common plane between two parallel ring-shaped retaining elements (3, 4), the two ring-shaped retaining elements (3, 4) being fitted on the rotary shaft (1), the second ring-shaped retaining element (4) being arranged so as to be able to be shifted angularly with regard to the first ring-shaped retaining element (3), the first ring-shaped retaining element (3) having on one of its sides (10) a certain number of bores (11) circumferentially arranged on a first constant radius (R) and destined to take up the pins (16) fitted on one of the sides of the tool or the blade (15), characterized by the fact that the second retaining element (4) has at least one recess (25) on its circumference and extends radially inward, the said recess (25) having a circumferential aperture corresponding to the circumferential length of a tool or a blade (15), that the said first ring-shaped retaining element (3) is provided with a concentric seat taking up a rotarily fitted toothed rim (8) having on one of its sides (10a) a certain number of bores (12) circumferentially arranged on a second constant radius (R1) and destined to take up the pins (13) fitted on the other side of the tool or the blade (15) as the tool or the blade might be pivoted on its own axis, that the said second retaining element (4) has on its inner side at least one concentric groove (18, 19) destined to take up either the pins (16) arranged on one of the sides of the tool or the blade (15) or else the pins (13) arranged on the other side of the tool or the blade (15) as the said tool or blade (15) might be pivoted on its own axis when the tool or the blade is inserted through the recess (25), which action is followed by the angular shift of the said ring-shaped retaining element with a view to tightening the tool or the blade (15) between the inner sides of the said first and second retaining elements (3, 4).

2. Device according to claim 1, characterized by the fact that the recess (25) radially extending inward into the ring-shaped retaining element (4) has the shape of a seat (25a) open to the inner side of the said ring-shaped retaining element (4), though without crossing it axially.

3. Device according to claim 1, characterized by the fact that the ring-shaped retaining element (4) is interlocked by means of a locking niece (26) having a circumferential length corresponding to the length of the recess (25), the said locking niece (26) being fitted so as to be able to be shifted axially against the resistance of a spring (28) situated between the second ring-shaped element (3) and the locking piece and sliding on partially threaded screws (27) fitted on the said locking niece (26) so that an axial shift of the locking piece (26), when disengaged from the recess (25), will allow a rotary motion, the said motion resulting in enclosing the said locking niece (26) between the said elements (3, 4) during the insertion of the tool or the blade (15) through the recess (25), and that, when the said ring-shaped retaining element (4) effectuates an inverse rotaty motion, the said locking piece (26) will engage automatically in the said recess (25) and interlock the rotary motion of the ring-shaped retaining element (4).

FIG. 2

FIG. 1

# FIG. 3

EP 0 334 227 B1

FIG. 5

FIG. 4